# EUROPEAN PATENT APPLICATION

(11) **EP 1 528 786 A2**
(43) Date of publication of application: **04.05.2005**
(21) Application number: 04025547.3
(22) Date of filing: 27.10.2004
(51) Int. Cl.: H04N 1/32

(54) **Duplex input scanning for a partially disabled image scanner**

(30) Priority: 31.10.2003 US 698508
(71) Applicant: Xerox Corporation, Rochester, New York 14644 (US)
(72) Inventor: Burch, Harry C., Penfield, NY 14526 (US)
(74) Representative: Grünecker, Kinkeldey, Stockmair & Schwanhäusser Anwaltssozietät

(57) **Abstract**

In an image input scanner, as would be found in a digital copier, images are recorded from a first side of each of a plurality of sheets in a set by a first image scanning module (ISM-1) and from a second side of each of a plurality of sheets in a set by a second image scanning module (ISM-2) in standard operation. If it is determined that ISM-1 is not operating in a satisfactory manner, the user is advised through a user interface to record the second side images with ISM-2, and then place the set of sheets in a predetermined orientation in the scanner so that ISM-2 can record the first side images as well.

## Description

### TECHNICAL FIELD

The present disclosure relates to the scanning of original hard-copy images into electronic form, as would be found, for example, in a digital copier or other scanner.

### BACKGROUND

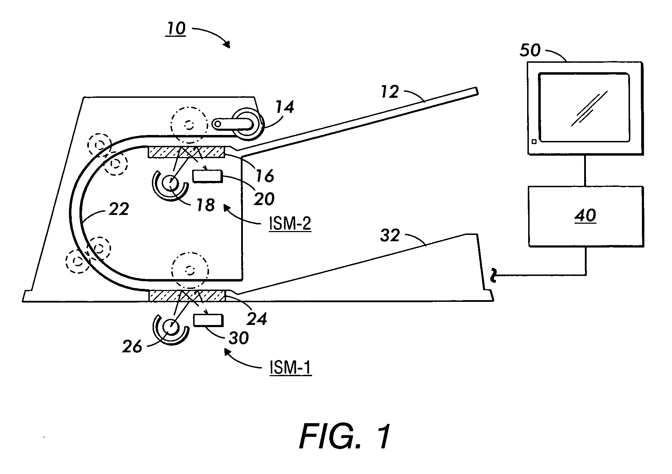

Digital copiers and scanners, in which original images on one or both sides of a series of sheets are scanned into digital data which is subsequently used for making copies or other purposes, are well known. Figure 1 is a simplified elevational view of a certain kind of digital scanner 10 (which can be a portion of a digital copier), in which there are provided two separate image scanning modules. Sheets bearing images to be recorded are initially stacked in an input tray 12. In a standard or conventional scanning operation, individual sheets are successively drawn from the stack in tray 12, by a mechanism such as including friction wheel 14, as is generally familiar in the art. As shown in the illustrated embodiment, each drawn sheet is first exposed at an image scanning module, which includes a cover glass 16, lamp 18, and scanning bar 20. This first image scanning module reads the downward-facing side of each sheet as the sheet passes over the cover glass 16: the lamp 18 illuminates a small strip of the image, while scanning bar 20 records the image.

Further, in a standard or conventional scanning operation, after exposure of an image on one side of the sheet, the sheet is effectively inverted by passage (such as with motorized rollers, as generally shown) through inversion path 22, at the end of which is another image scanning module, including cover glass 24, lamp 26, and scanning bar 30. As can be seen, each sheet passing through scanner 10 is exposed first on one side, by one image scanning module, and then on the other side, by the other image scanning module. In this way, each sheet is scanned (i.e., the image thereon is recorded) on both sides, in an essentially single motion, without having to be re-scanned or have its directional motion reversed, as is known in other, single-scanning-module arrangements. The scanned sheets are then re-accumulated in catch tray 32.

Each scanning bar 20, 30 is a photosensitive device, typically including one or more linear arrays of photosensors, which record light reflected from a series of small, pixel-size areas on the image-bearing sheet as the sheet is moved therepast. Each bar can be, for instance, a page-width array of photosensors, such as each including several abutted silicon chips, or can comprise a single device with associated optics.

In Figure 1, the second image scanning module (ISM) along the sheet path is generally referred to as ISM-1, because that is the ISM that typically scans the front-side images in standard simplex (one-sided) operation, when the sheets are placed face-up in tray 12. The first image scanning module along the path is referred to as ISM-2, because that ISM typically records the "back" side images in normal operation. However, in different hardware embodiments, an image scanning module corresponding to ISM-2, which records images on the "back" sides of sheets in tray 12, can be disposed downstream of ISM-1 along the path, or ISM-2 can be disposed substantially at the same location along the path as ISM-1, so that corresponding portions of two sides of a sheet are recorded substantially simultaneously. In such cases, ISM-1 would point downward whereas ISM-2 points upward to illuminate and record an image. Also, ISM-2 can be designed to travel under a stationary platen (not shown) for recording of images on stationary items, in a manner familiar in digital copiers.

Typically associated with a scanner such as 10, whether it is a stand-alone input scanner or an effective part of a larger apparatus such as a digital copier, is a central control system, here generally indicated as 40, which includes software and hardware for operating the mechanical parts of scanner 10, as well as controlling the flow of image data from each scanning bar 30 to form useable image data in a memory, such as for subsequent printing. The control system 40 further interacts with a user interface 50, such as would appear on the control panel of a digital copier, to display messages to a human user standing near the scanner 10.

One practical challenge for a scanner such as shown in Figure 1 is using the apparatus when one of the two image scanning modules becomes inoperative or an unsatisfactory output, for instance when one of the scanning bar 20, 30 does not work properly, or if one of the lamps 18, 26 burns out. It may be useful to provide a system by which the remaining functional image scanning module can nonetheless be used to scan both sides of double-sided imaged sheets.

### PRIOR ART

U.S. Patent 6,091,929 shows a system in which a user interface associated with a digital copier provides detailed instructions for a user of the scanner, with attention to obtaining correct staple position in the output document.

### SUMMARY

There is provided a method of operating an image input scanner, the image input scanner including a first image scanning module (ISM) for recording images from a first side of each of a plurality of sheets in standard operation, and a second image scanning module (ISM) for recording images from a second side of each of a plurality of sheets in standard operation, the first ISM and the second ISM being arranged along a path, a tray disposed at a beginning of the path for retaining a stack of sheets for scanning by the first ISM and the second ISM, and a user interface operative associated with the image input scanner. An output of the first ISM is determined to be unsatisfactory. An instruction is communicated through the user interface to arrange the plurality of sheets in the tray in a predetermined orientation. The first side of each of the plurality of sheets is recorded with the second ISM.

There is provided a method of operating an image input scanner, the image input scanner including a first image scanning module (ISM) for recording images from a first side of each of a plurality of sheets in standard operation, and a second image scanning module (ISM) for recording images from a second side of each of a plurality of sheets in standard operation, the first ISM and the second ISM being arranged along a path, a tray disposed at a beginning of the path for retaining a stack of sheets for scanning by the first ISM and the second ISM, and a user interface operative associated with the image input scanner. When an output of the first ISM is determined to be unsatisfactory, it is communicated through the user interface that the first ISM is outputting degraded image data.

### BRIEF DESCRIPTION OF THE DRAWINGS

Figure 1 is a simplified elevational view of a certain kind of digital scanner.

Figures 2-8 represent portions of a flowchart reflecting the operation of a control system, interacting with a scanner and user interface as in Figure 1.

### DETAILED DESCRIPTION

The overall function of the described embodiment is to facilitate a "limp-along" operation of a two-imaging-station scanner, such as shown in Figure 1 above, whereby two imaged sides of an original set of hard-copy sheets can be successfully scanned if one of the image scanning modules is inoperative. The method addresses situations in which either scanning station or ISM is operating in an unsatisfactory manner, e.g., is found to output degraded data (such as when the optical path associated therewith is dirty, or there is some other malfunction), or if the scanning station or ISM is not at all operational (such as when the associated lamp is burnt out). In brief, in "limp-along" mode, the one functioning scanning bar is used to scan first one side of each of a series of sheets, and then the other side of each of the series of sheets. Successful completion of the scanning requires coordination of instructions to the human user, as would be displayed to the user through a user interface 50 as shown in Figure 1, with data flows from the functioning image scanning module, so that the final result of the scanning operation, a data set related to series of scanned page images, is identical to a data set that would have been obtained through conventional scanning with the scanner 10.

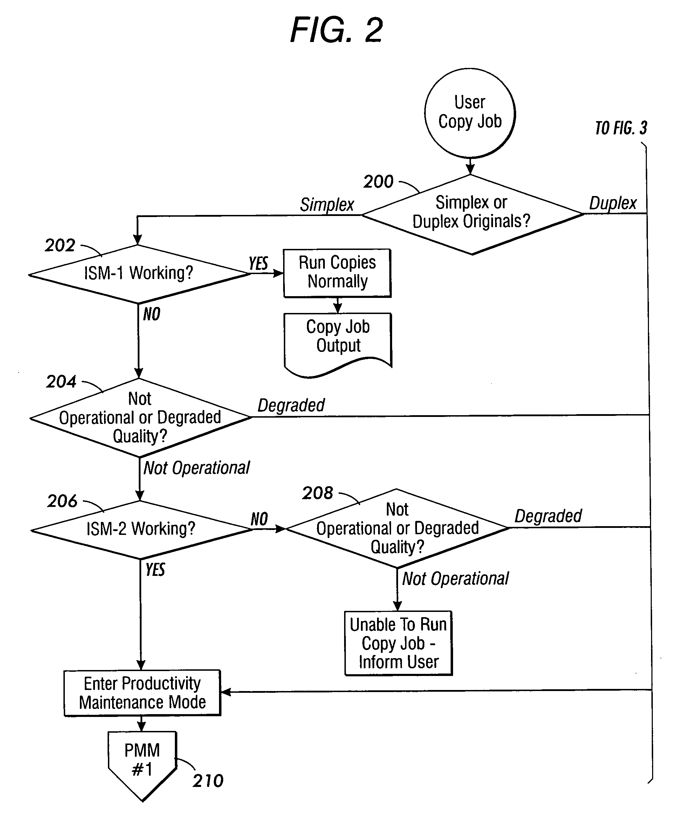

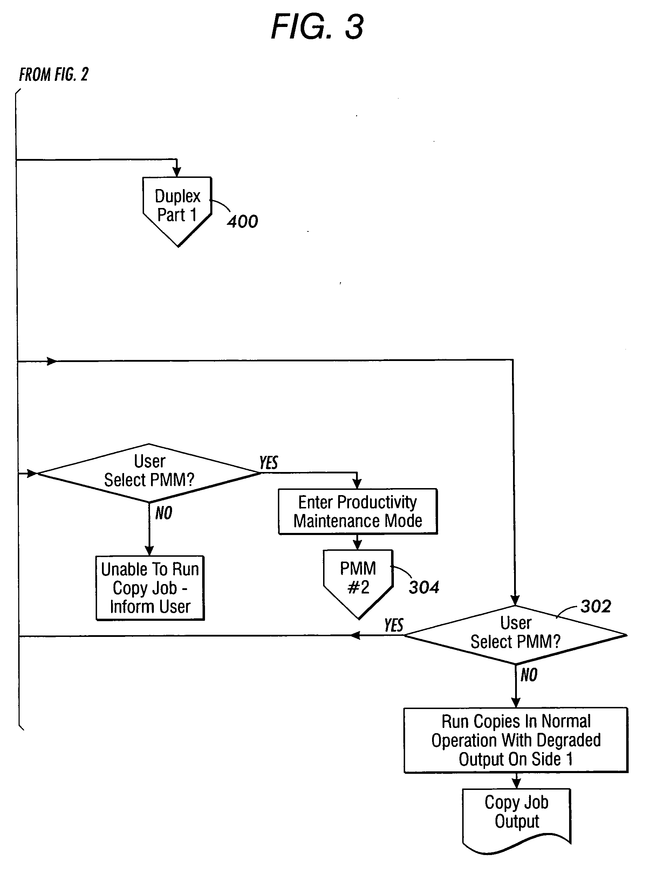

Figures 2-8 represent portions of a flowchart reflecting the operation of a control system 40, interacting with both scanner 10 and user interface 50 as shown in Figure 1. The overall function of the described operation is to determine the operating condition of each ISM-1 and ISM-2 and, in tum, instruct the user to operate the scanner for best results. The determination of whether one or the other ISM is operating in an unsatisfactory manner can be performed in various ways, depending on an particular embodiment. For instance, if the output of one ISM is consistent with mostly black pixels, this can be an indication of a major failure such as lamp burnout or loss of data connection; if the output data is consistent with streaking in the scanned image, as would occur for instance with dirt occluding a portion of the scanner bar, a downstream algorithm can detect such a condition and determine that the image quality is thus degraded. Various types of unsatisfactory image data and strategies for detecting them can be contemplated. Alternatively, if the human user happens to know, such as based on prior experience, that one ISM is operating in an unsatisfactory manner, the user can indicate the determination such as through user interface 50.

In Figures 2 and 3, which together form a single flowchart, a copy job (which can be more generally considered a scanning job) is initiated by a human user. At step 200, the human user indicates, through the user interface 50 to control system 40, whether a simplex (one side of each document sheet) or duplex (both sides of each document) scan is desired. If a simplex job is desired, all that matters is that the particular scanning station which is facing the imaged side of the sheets is operational. In this case, as shown at 202, if what is here called image scanning module or ISM-1, the image scanning module including scanning bar 30 is working, the copies are run normally. If, however, ISM-1 is not operational or outputting image data of degraded quality (step 204), a user is displayed an option of re-scanning using the other image scanning module module, ISM-2. The selection by the user of the unconventional ISM for a particular purpose is called here a "productivity maintenance mode" or PMM, and various PMM's will be described below. If ISM-1 is not working but ISM-2 is desired for simplex scanning, the method initiates a PMM (step 210) which will be described in detail below. If ISM-2 is desired to be used for simplex scanning (step 206) but does not output image data satisfactorily (step 208), then the user is given the option of either accepting the degraded image data (step 302) or invoking a suitable PMM (step 304).

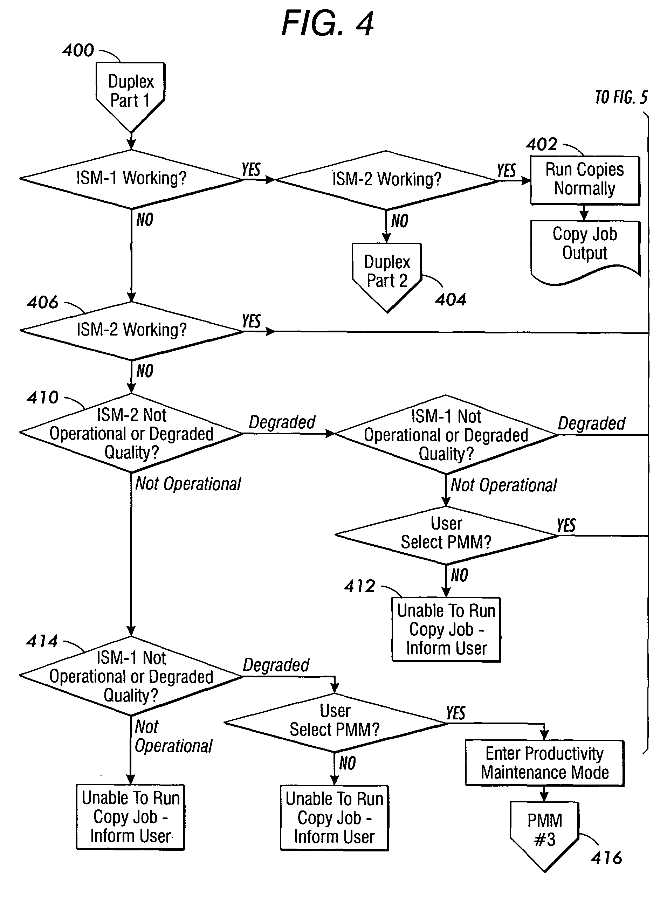

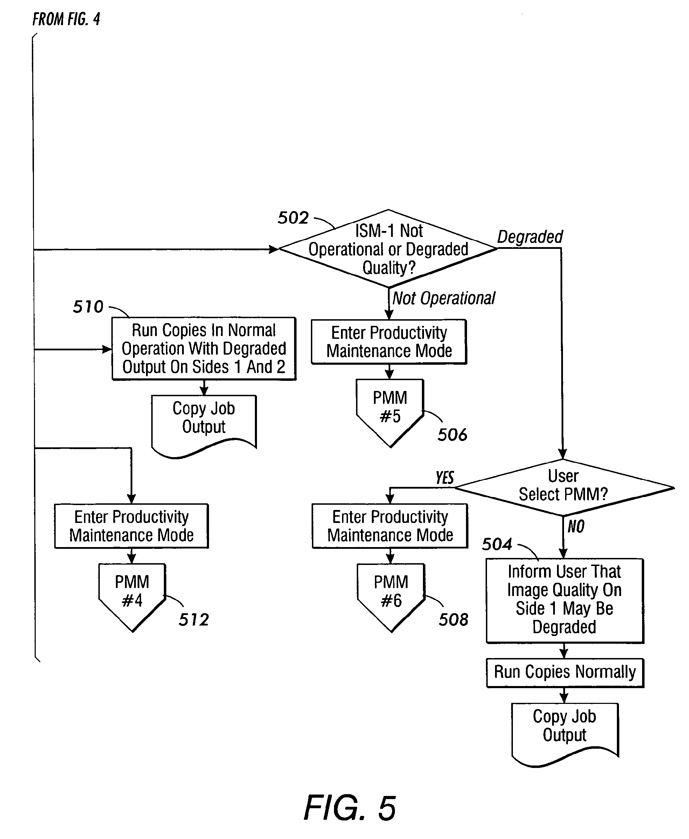

Figures 4 and 5 together form a single flowchart, showing steps in response to the human user desiring a duplex scanning job (see step 400 in Figure 3 and 4). If both ISM-1 and ISM-2 are working, as generally shown at 402, the scanning job proceeds normally. If ISM-2 is not working, a duplex routine which will be described below is initiated (step 404). If ISM-1 is not working but ISM-2 is working (step 406), the user is given an option (step 502) of permitting the scanning with degraded quality (step 504), or entering a PMM for avoiding use of the defective scanner (steps 506 or 508). Similarly, with the steps initiated at step 410, if ISM-2 is outputting data in a degraded manner or not at all, the user is presented with various options to do the scanning in degraded mode (step 510) or in a special PMM (step 512); or, if neither ISM-1 or ISM-2 are at all functional, the user is informed through the user interface (step 412). Continuing with Figure 4, at the steps starting with step 414, if ISM-2 is not operational but ISM-1 is degraded, the user can select a suitable PMM (step 416).

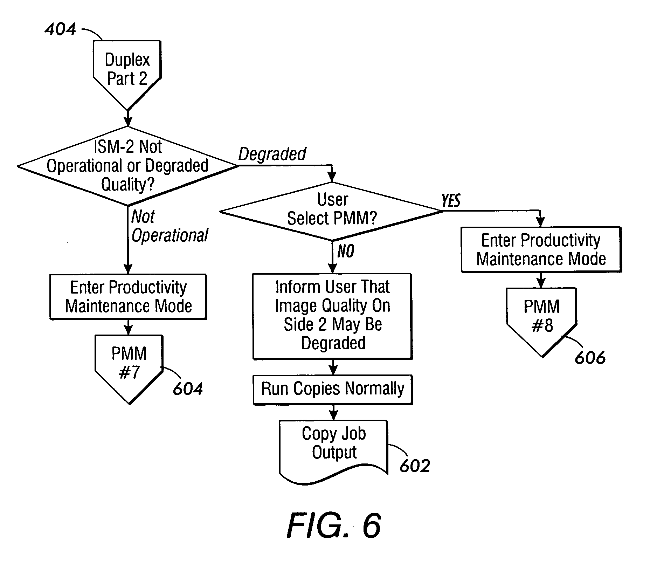

Figure 6 is a portion of a flowchart extending from step 404 in Figure 4. In this series of steps, if ISM-1 is working but ISM-2 is not, a user can choose to accept degraded data from ISM-2 (step 602); or, if ISM-2 is not operational, enter a PMM (steps 604 or 606).

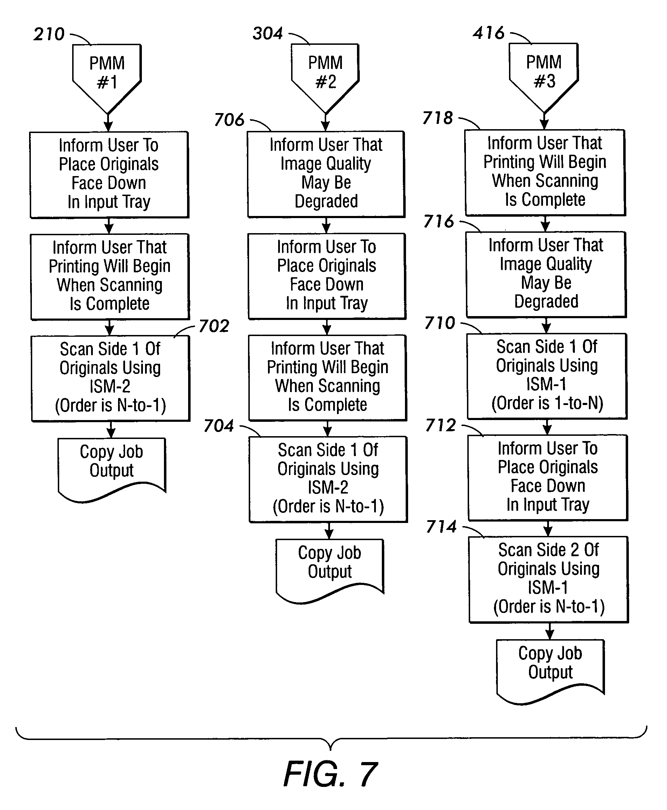

Figure 7 shows, in parallel, a series of "productivity maintenance modes" or PMM's, which are brought into operation by the specific conditions in the above flowcharts. Returning momentarily to Figures 2 and 3, if ISM-1 is not working but ISM-2 is desired for simplex scanning, the method initiates a PMM (step 210), the user is informed to place the original documents face-down in tray 12 (as shown in Figure 1) so that ISM-2 (with scanner bar 20 as shown in Figure 1) can scan the face-down images (step 702). If ISM-2 is desired to be used for simplex scanning, because ISM-1 is not operational (step 206) but ISM-2 does not output image data satisfactorily (step 208), then the user is given the option of another PMM (step 304), in which ISM-2 scans the face-down images (step 704) but the user is informed, such as through user interface 50, that the resulting image quality will be degraded (step 706). In either case of steps 702 or 704, when the images to be scanned are placed face-down in tray 12, the order of page scanning is N-to-1, i.e., the last page of the set will be scanned first: in such a case, downstream image processing, such as associated with control system 40, must take into account the page order of the incoming images, particularly in the context of digital copying, so that the copied set is printed out in a 1-to-N page order.

Further shown in Figure 7 is the PMM invoked at step 416 above, when ISM-2 is not operational but ISM-1 is degraded, and duplex scanning is desired. In this PMM, ISM-1 is used to scan first the first side images (i.e., the odd-numbered page images in a duplex set) in one operation (step 710); and then the user is instructed (step 712) to place the same set, face down, in tray 12 for scanning of the second side images (the even-numbered page images in a duplex set) by ISM-1 (step 714). At roughly the same time, the user must be advised or warned that image quality may be degraded (step 716). As the odd page images are accumulated in memory as a set before any of the even page images are scanned, at the end of the scanning process the two sets of page images must be interleaved before the data is used for copying; for this reason the user is advised (such as through user interface 50) that printing of copies will begin only after all scanning is complete (step 718). Also, the scanning order of the first-side images is 1-to-N while the scanning order of the second side images in N-to-1, and this must be taken into account when the page image data is accumulated in memory.

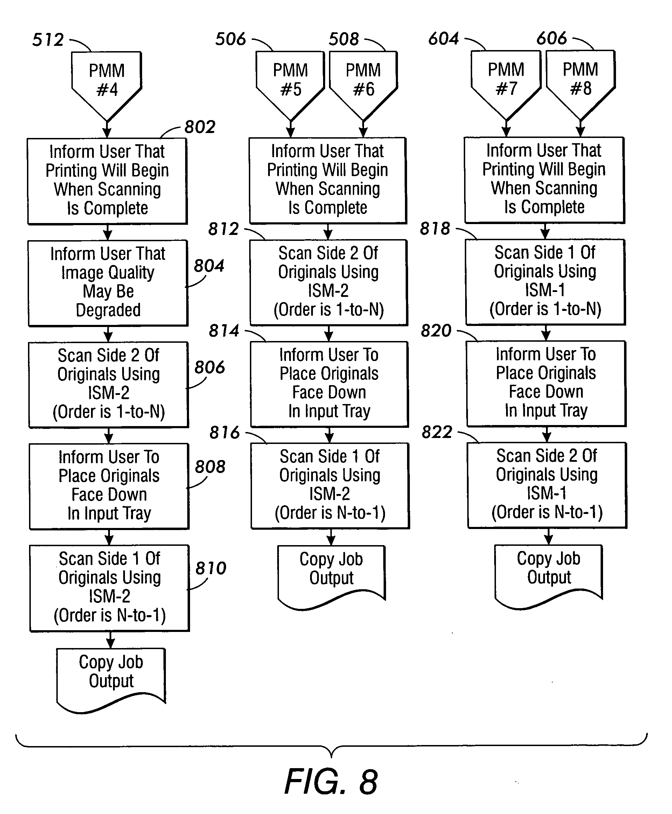

Figure 8 shows further PMM's as invoked according to the conditions described above. The PMM at step 512 is invoked when ISM-1 is inoperative and ISM-2 is outputting data in a degraded manner: in such a case, after informing the user that printing/copying will begin when scanning is complete (step 802), and that image quality may be degraded (step 804), the second side of each sheet in the set is scanned 1-to-N by ISM-2 (step 806). Then, the user is instructed through user interface 50 to place the set in tray 12 face down, for N-to-1 scanning of the first side of each sheet in the set (step 810).

The PMM invoked by steps 506 or 508 above is initiated when ISM-1 is not working but ISM-2 is working. In such a case, the second side of each sheet in the set is scanned 1-to-N by ISM-2 (step 812). Then, the user is instructed through user interface 50 to place the set in tray 12 face down (step 814), for N-to-1 scanning of the first side of each sheet in the set (step 816). The PMM invoked by steps 604 or 606 above is initiated in the case where ISM-1 is working but ISM-2 is not operational. In such a case, the second side of each sheet in the set is scanned 1-to-N by ISM-1 (step 818). Then, the user is instructed through user interface 50 to place the set in tray 12 face down (step 820), for N-to-1 scanning of the first side of each sheet in the set (step 822).

In effect, the ability to use one ISM for recording images on both sides of a series of sheets when the other ISM is unsatisfactory enables a scanner or copier to retain a general usefulness for a period of time before the scanner or copier is repaired, thus maintaining productivity of the apparatus.

## Claims

1. A method of operating an image input scanner, the image input scanner including a first image scanning module (ISM) for recording images from a first side of each of a plurality of sheets in standard operation, and a second image scanning module (ISM) for recording images from a second side of each of a plurality of sheets in standard operation, the first ISM and the second ISM being arranged along a path, a tray disposed at a beginning of the path for retaining a stack of sheets for scanning by the first ISM and the second ISM, and a user interface operative associated with the image input scanner, comprising:
determining that an output of the first ISM is unsatisfactory;
communicating through the user interface an instruction to arrange the plurality of sheets in the tray in a predetermined orientation; and
recording the first side of each of the plurality of sheets with the second ISM.

2. The method of claim 1, the determining step including determining that the first ISM is not operational.

3. The method of claim 1, the determining step including determining that the first ISM is capable of outputting degraded image data.

4. The method of claim 3, further comprising communicating through the user interface that the first ISM is outputting degraded image data.

5. The method of claim 1, further comprising determining that an output of the second ISM is unsatisfactory.

6. The method of claim 5, further comprising communicating through the user interface that the second ISM is outputting degraded image data.

7. A method of operating an image input scanner, the image input scanner including a first image scanning module (ISM) for recording images from a first side of each of a plurality of sheets in standard operation, and a second image scanning module (ISM) for recording images from a second side of each of a plurality of sheets in standard operation, the first ISM and the second ISM being arranged along a path, a tray disposed at a beginning of the path for retaining a stack of sheets for scanning by the first ISM and the second ISM, and a user interface operative associated with the image input scanner, comprising:
determining that an output of the first ISM is unsatisfactory; and
communicating through the user interface that the first ISM is outputting degraded image data.

8. The method of claim 7, further comprising
communicating through the user interface an instruction to arrange the plurality of sheets in the tray in a predetermined orientation; and
recording the first side of each of the plurality of sheets with the second ISM.

9. The method of claim 7, further comprising determining that an output of the second ISM is unsatisfactory.

10. The method of claim 9, further comprising communicating through the user interface that the second ISM is outputting degraded image data.
